# EUROPEAN PATENT SPECIFICATION

(11) **EP 0 832 010 B1**
(45) Date of publication and mention of the grant of the patent: **25.07.2001**
(21) Application number: 96918925.7
(22) Date of filing: 21.06.1996
(51) Int. Cl.: B60P 1/46

(54) **LOADING LIFT DEVICE FOR MOUNTING TO THE CONTAINER OF A TRUCK**
HEBEBÜHNE ZUM BEFESTIGEN AN EINER PLATTFORM EINES LASTKRAFTWAGENS
DISPOSITIF DE LEVAGE DE CHARGE A MONTER SUR LE CONTENEUR D'UN CAMION

(30) Priority: 23.06.1995 BE 9500559
(43) Date of publication of application: 01.04.1998
(73) Proprietor: SOLID b.v.b.a., B-2360 Oud-Turnhout (BE)
(72) Inventor: NUYTS, Henri, B-2360 Oud - Turnhout (BE)
(74) Representative: Bockstael, Daniel
(86) International application number: NL9600256
(87) International publication number: WO9700788

(56) References cited:
- DE-U- 8 620 248
- US-A- 3 877 590
- US-A- 4 563 121

## Description

The invention relates to a loading lift device for mounting to the container of a truck as this is described in the preamble of claim 1.

Such a device is known from US-A-4 563 121. In case of this device the column is provided with two separate V-shaped guides (32) one of which has to be adjustable in view of the fact that they are provided at a relatively large distance from each other so that tolerances in the dimensions and deviations in these caused by temperature variations have to be taken into account.

Now the object of the invention is to remove these disadvantages and to that end the features indicated in the characterizing portion of the main claim are provided. The parts for guiding a slider in respect of a column being positioned such that no adjustable parts are necessary, the space in which the means for moving the slider is positioned lying outside the parts for guiding the slider.

Further it can be remarked that in respect of the above mentioned US patent the construction according to the present invention provides the following advantages:
1) Inside the opening of the container no moving parts are present;
2) The floor as well as the roof of the container can extend itself till the plane of the loading platform when this is in its closed position so that said loading platform may serve for closing the container either or not in combination with an upper door;
3) In transverse direction the floor and the roof can extend till the profiles of the columns so that the sliders can be moved till such a height that they extend above the roof of the container;
4) In the closed position of the loading platform the gliders can extend itself till the end of the container and can function as outer covering.

Although there is the possibility of mounting rollers between a column and a slider, in particular it will be provided for, that the protuberance is represented by a single rib onto which one or more strips of plastic are fixed, and the excavation is represented by two L-shaped ribs at some distance from each other together comprising the plastic ribs.

There, the sliding surfaces between protuberance and excavation and the points of action for the means for moving the sliders in relation to the columns can be substantially in a plane coinciding with, or being parallel to, the side wall of the container. Due to this, an advantageous transmission of the occurring forces is achieved.

In particular, the profile of the slider and that of the column can be achieved by extrusion from aluminium. Then, the profiles need only be subjected to a few further workings. These further workings could be e.g. the drilling of holes for the bolts by which the profiles are secured to the other parts. The columns can be secured to the rear edges of the container, for example. They can also be part of the end edge of the container and at their upper ends be connected by a top rail and at their lower ends by a part of the floor structure.

The profile of the column can be provided with a vertically extending edge portion directed backwards in relation to the container, upon which edge portion a sealing strip can be mounted which can cooperate with the loading platform in its folded upward condition, or with a door or the like mounted to the loading platform.

The profile of the sliders can extend beyond the edge portion of the column so that a moisture barrier is formed between said edge portion and the loading platform.

According to one embodiment it can be provided for, that the side walls of the columns are located opposite each other and that the side walls of the sliders are located in the prolongation of the side walls of the container, in which the two vertical spaces for receiving at least one part of the means for moving the sliders in vertical direction are formed between the stiffening or connecting ribs of the side walls of slider and column and a part of the side wall of the column.

The space concerned can then be open to the outside so that the means for moving the slider are easily accessible. Said space can be covered up by a releasable plate being located in the prolongation of the container side wall. Naturally, the space will continue through the container floor so that the sliders can be moved over a considerable height.

According to another embodiment, the outer surface of the side walls of the columns can connect to the outer surface of the container side walls and the vertical space for receiving the means for moving the slider in relation to the column can be formed between stiffening ribs of the column and of the slider, said space further being limited by a part of the side wall rib of the slider.

Further, there is the possibility that the column is provided with a second substantially plate-shaped longitudinal rib at least partly enclosing the slider and having its free vertical end edge provided with a sealing strip that can cooperate with the loading platform in its folded-up condition or with a door or the like closing off the container.

The space for receiving the moving means of a slider can be formed by a prolongation of the stiffening rib of the column being located in the plane of the charging opening, the second longitudinal rib of the column, the side wall of the slider and a stiffening rib connected to it.

In this case, the space concerned, as seen in cross-section, is closed off completely to the outside.

It is also possible that the space for the moving means is located behind the stiffening rib of the column being situated at the greatest distance from the container and between the side wall of the slider and a stiffening rib connected to it.

Here, the space concerned can be open to the outside and said space can be sealed by a releasable covering plate.

The means for moving the sliders in relation to the columns can be represented by pressurized medium-operated cylinders being situated in said spaces. There is also the possibility that tie rods or cables are applied, which extend upwards through the spaces and are led across guiding means to a pressurized medium-operated cylinder or to a winding mechanism.

According to preferred embodiment, the loading platform is directly pivotably connected to both sliders, in such a way that both sliders are connected to each other by means of the loading platform.

Means for securing the loading platform in certain positions will have been provided between the sliders and the loading platform, and the sliders and the loading platform will be executed in such a way that in folded-in condition of the loading platform, the means are completely received within the sliders. Said means can be in the form of gas springs, for example. Pressurized medium-operated cylinders can be applied as well.

The invention is further explained by way of examples shown in the drawing, in which:
Figs. 1 diagrammatically shows a horizontal section across a part of the rear edge of a container with a loading lift device according to the invention mounted to it;
Fig. 2 diagrammatically shows a side view of a slider, a loading platform connected to it and a part of the floor of the container;
Figs. 3 and 4 show horizontal sections corresponding to Fig. 1, but of modified embodiments.

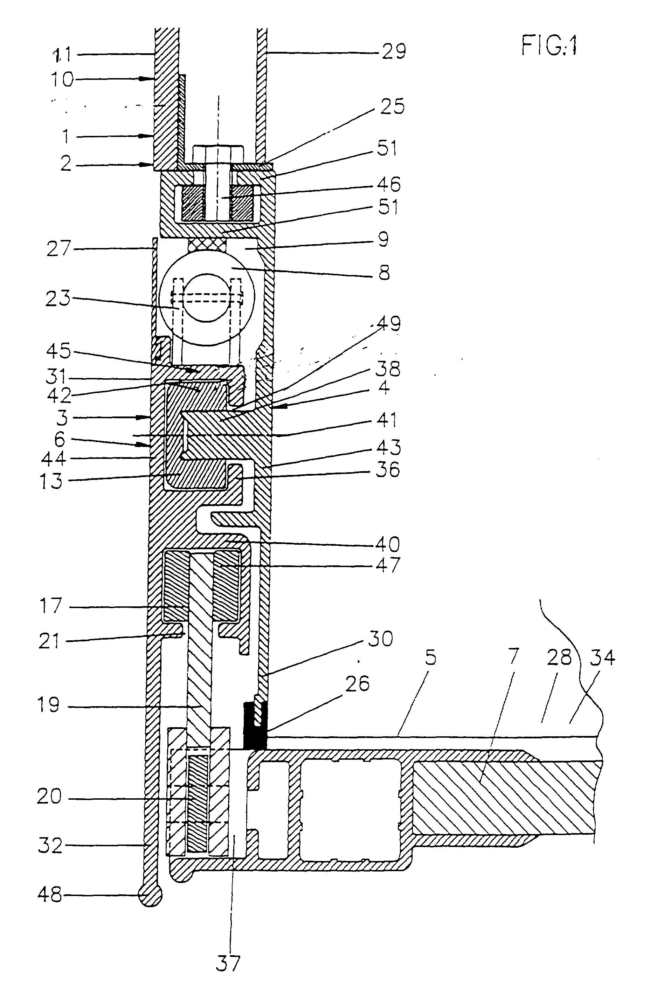

Figs. 1, shows a part of a vehicle 1 being provided with a container 2 to which a loading lift device 3 is mounted, only part of which being shown. Of the container 2, only the side wall 10 the charging opening 5 and the floor 28 have been illustrated. The loading lift device comprises the columns 4 connecting to the side walls 10 and along which sliders 6 i are movable for moving the loading platform 7 up and down by means of the hoisting mechanism 8. Said hoisting mechanism 8, which can be a pressurized medium-operated cylinder, as indicated in the Figures 1, 3 and 4 or a tie rod or cable is located in the vertical space 9 continuing substantially across the entire height of column 4 and slider 6. When the hoisting mechanism is in the form of belts or cables, these can be wound onto a drum not further indicated and be led across rollers. In the latter case, they can also be connected to a pressurized medium-operated cylinder.

The outer surface of the slider 6 can be in the same plane 31 as the outer surface of the side wall 10 of the container 2. Although the space 9 could be closed off by a part of the slider 6, it is preferably provided for, that the space is kept accessible and that it can be closed off by a releasable covering plate 27.

As shown in Fig. 1 in particular, the side wall 43 of the column 4 can have a sliding member 38 comprising a protuberance 42 cooperating with an excavation 49 formed by two ribs 45 wich can act as stiffening ribes for the side wall 44 of the slider 6 at the same time. The plane in which the parts are movable in relation to each other is indicated by 41.

The side wall 44 of the slider 6 is further provided with a stiffening rib 40 also carrying the pivot for the loading platform 7.

The slider 6 provided with the excavation 49 cooperates with the sliding member 38 provided to the side wall 43 of the column 4. The ribs 45 are provided with the parts 36 enclosing the protuberance 42 of the sliding member 38, said protuberance 42 consisting of a U-shaped strip 13 of plastic that has been secured on the part connected to the column 4. The column 4 is further provided with stiffening ribs 51 so that the column can be fixed to the connecting beam 25 between the outer wall 11 and the inner wall 29 of the side wall 10 of the container by means of bolts 46.

It is also possible to form the sliding member 38 integrally from one single plastic strip being secured on the side wall 43 of the column 4.

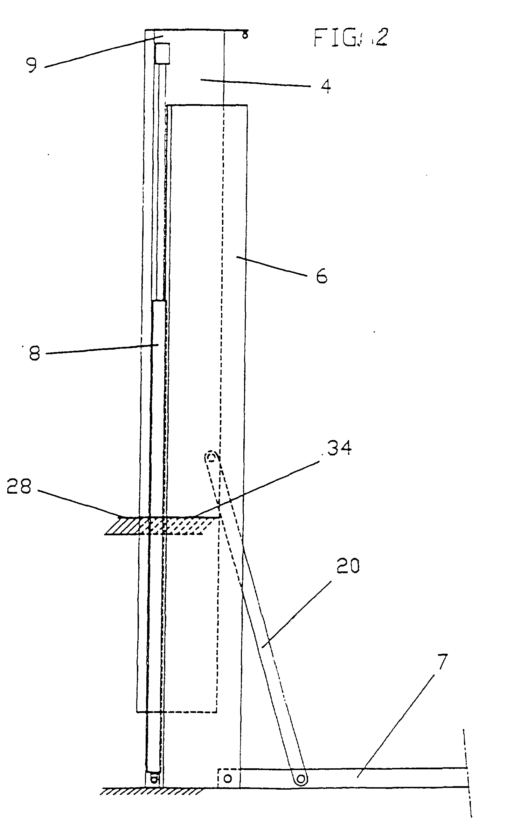

The slider 6 has a space 17 being defined by a substantially L-shaped stiffening rib 40. The space 17 contains the closing mechanism 47 being connected to the sliding part 19 protruding outwards through the slot 21 and being provided with the pivot for loading platform 7. As appears from Fig. 2 in particular, the loading platform 7 is further connected to a suspension member 20. Due to this, the loading platform 7 can be locked in certain positions. Possibly, the suspension member 20 is represented by a pressurized medium-operated cylinder.

The side wall 43 of the column 4 has an extension 30 at its end edge being provided with the sealing strip 26 to which the loading platform 7 connects in its closed position. Thus, the charging opening is defined by the loading floor 28 or its extension 34, by the sealing strips 26 and the roof of the container 2. The extension 30 can additionally be provided with a stiffening rib. By means of the sealing strip 26, a moisture barrier 37 can be achieved.

The side wall 44 of the slider 6 is provided with an extension 32 for laterally defining the space within which the loading platform 7 is located when in the closed position. At its end, the extension 32 is provided with a stiffening rib 48.

The cylinder of a pressurized medium-operated cylinder 8 can be connected to the column 4, the piston rod of said cylinder being connected to the slider 6 by fastening means 23 mounted to it. As mentioned before, the cylinder 8 is located in the vertical space 9 extending downwards through or along the floor 28 of the container 2.

Fig. 2 shows a side view and partial cross-section across a portion of the device, to wit in particular: the loading floor 28, its extension 34, extending between the columns 4, the sliders 6, the loading platform 7 fastened to the sliders, its suspension member 20, and the space 9 in which the hoisting mechanism 8, such as in the form of a pressurized medium-operated cylinder, is situated.

Here, the loading platform 7 is located in a lower position, such as close to the ground, so that a load can be placed on it or be removed from it. Further the loading platform 7 can be brought into the closed position so that it closes off the opening 5 of the container 2.

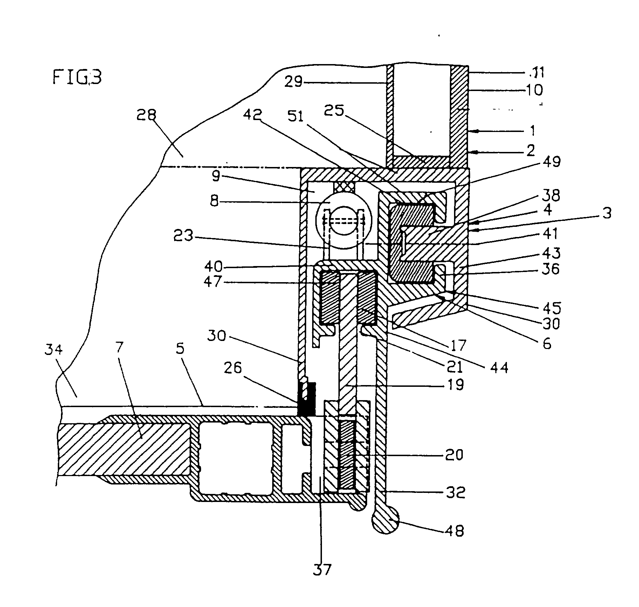

Fig. 3 shows a cross-section corresponding to Fig. 1, but of a slightly modified embodiment. Corresponding parts have been indicated with the same reference numbers.

Now, the outer surface of the side wall 43 of the column 4 is situated in the plane 31 in which the outer surface 31 of the side wall 10 of the container 2 is situated as well. The part 30 of the side wall 43 carrying the sealing strip 26 now encloses the slider 6. The slider 6 is again slidably connected to the column 4 in the same way as in the previously described embodiment. The space 9 in which the pressurized medium-operated cylinder 8 is situated is now completely closed off, naturally with the exception of its lower end.

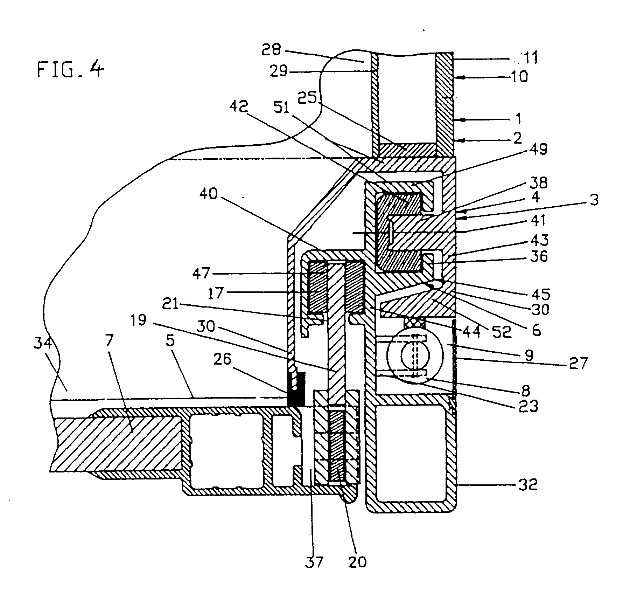

The embodiment according to Fig. 4 largely corresponds to the one according to Fig. 3. However, here the space 9, in which the pressurized medium-operated cylinder 8 is situated, is mounted behind the column 4, as seen from the container 2.

To that end, the side wall 43 of the column 4 is provided with a stiffening rib 52 to which the cylinder 8 has been fixed. At the other side, the cylinder 8 is again connected to the slider 6 by the connecting means 23 in the known way. Now, the space 9 is accessible from the outside again and can be closed off by the covering plate 27.

It will be obvious, that only some possible embodiments of the loading lift device according to the invention have been illustrated in the drawing and described above and that many modifications can be made without leaving the scope of the invention as it is defined in the following claims.

## Claims

1. Loading lift device for mounting to the container (2) of a truck (1), said device (3) as seen in its mounted state, comprising two vertical columns (4) attached to the container (2) at both sides of the charging opening (5) or being part of this, said columns (4) being provided with means for slidably receiving sliders (6) to which a loading platform (7) is pivotably fixed, means (8) being provided for moving the sliders, said means being connected to the columns (4) or the container (2) at one side and to the sliders (6) at the other side and each being positioned in a space (9) formed by parts of a column and a slider, each of said columns (4) and sliders (6) being in the shape of elongated beams extending in vertical direction and comprising a plate-shaped longitudinal side wall (43,44) which, as seen in plan view, extend in longitudinal direction of the container (2) and substantially parallel to the side wall (10) of this, the side wall (43,44) of one part, so either the column (4) or the slider (6), being provided with protuberances forming an excavation extending in longitudinal directon of the beam, **characterized in that** the side walls (43,44) of both the column (4) and the slider (6) are provided with protuberances (42,38) and stiffening ribs (40, 45,51,52), all said protuberances and ribs being substantially rectangular to the side walls (43,44) of either the column (4) or the slider (6), said excavation (49) cooperating with a protuberance (42) on the other part to establish the slidable connection between both parts (4,6), said excavation being provided outside the space (9) in which the means (8) for moving the slider (6) is positioned, at least a part of the side wall (44) of the slider (6) either a stiffening rib of said side wall extending towards the moving means for this, said side walls (43, 44) of the column (4) and the slider (6) extending at such a distance from each other that the stiffening ribs (40,45,51,52) of both parts are situated in the space between said side walls and extend till near the side wal of the other part, said column and slider mainly being achieved by extrusion from aluminium.

2. Loading lift device according to claim 1, characterized in that the protuberance (38) is formed by a single rib on which one or more strips (13) of plastic (13) have been secured and the excavation (49) is formed by two spaced-apart L-shaped ribs (45,36) together enclosing the plastic strip.

3. Loading lift device according to claim 1 or 2, characterized in that the profile of the column (4) is provided with an edge part (30) extending backwards and vertically in relation to the container (2), upon which a sealing strip (26) has been mounted which can cooperate with the loading platform (7) in its folded-up position, or with a door or the like mounted to the container (2).

4. Loading lift device according to claim 3, characterized in that the profile of the slider (6) extends beyond the edge portion (30) of the column (4) so that a moisture barrier (37) is formed between said edge portion and the loading platform.

5. Loading lift device according to one of the preceding claims, characterized in that the side walls (43) of the columns (4) are located opposite each other and that the side walls (44) of the sliders (6) are located in the prolongation of the side walls (10) of the container (2), in which the two vertical spaces (9) for receiving at least one part of the means (8) for moving the sliders (6) in vertical direction are formed between the stiffening or connecting ribs (51,45) of the side walls (43,44) of column (4) and slider (6) and a part of the side wall (43) of the column (4).

6. Loading lift device according to one of the claims 1 - 4, characterized in that the outer surface of the side walls (43) of the columns (4) connects to the outer surface of the side walls (10) of the container (2) and that the vertical space (9) for receiving the means (8) for moving the slider (6) in relation to the columns (4) are formed between stiffening ribs (51,52;40,32) of the column (4) and of the slider (6), said space (9) further being limited by a part of the side wall (44) of the slider.

7. Loading lift device according to claim 6, characterized in that the column (4) is provided with a second substantially plate-shaped longitudinal rib (30) at least partly enclosing the slider (6) and having its free vertical end edge provided with a sealing strip (26) that can cooperate with the loading platform (7) in its folded-up condition or with a door or the like closing off the container (2).

8. Loading lift device according to claim 6 or 7, characterized in that the space (9) for receiving the moving means (8) of a slider (6) is formed by an extension of the stiffening rib (51) of the colomn (4), being situated in the plane of the charging opening (5), and the second longitudinal rib (30) of the column (4) connecting to it, the side wall (44) of the slider (6) and a stiffening rib (40) connected to it.

9. Loading lift device according to claim 6 or 7, characterized in that the space (9) for the moving means (8) is located behind the stiffening rib (52) of the column (4) being situated at the greatest distance to the container (2) and between the side wall (44) of the slider (6) and an extension (32) connected to it.

10. Loading lift device according to claim 9, characterized in that the space (9) concerned is open to the outside and can be sealed off by a releasable covering plate (27).

## Patentansprüche

1. Hubladevorrichtung zum Befestigen an einem Behälter (2) eines Lastkraftwagens (1), wobei besagte Hubladevorrichtung (3), gesehen in ihrem montierten Zustand, zwei vertikale Säulen (4) umfasst, die zu beiden Seiten der Ladeöffnung (5) an dem Behälter (2) befestigt sind oder einen Teil davon darstellen, wobei besagte Säulen (4) mit Mitteln versehen sind, um verschiebbar Schlitten (6) aufzunehmen, an denen eine Ladeplattform (7) scharnierbar befestigt ist, wobei Mittel (8) zum Bewegen der Schlitten vorgesehen sind, wobei besagte Mittel an einer Seite an den Säulen (4) oder dem Behälter (2) und an der anderen Seite an den Schlitten (6) befestigt sind und jeweils in einem von Teilen einer Säule und eines Schlittens gebildeten Raum (9) positioniert sind, wobei jede der besagten Säulen (4) und Schlitten (6) in Form länglicher Träger vorliegt, die sich in vertikaler Richtung erstrecken und eine plattenförmige Längs-Seitenwand (43,44) aufweisen, die, gesehen in Draufsicht, sich in Längsrichtung des Behälters (2) und hauptsächlich parallel zu dessen Seitenwand (10) erstrecken, wobei die Seitenwand (43,44) einerseits, wie entweder die Säule (4) oder der Schlitten (6), mit Vorsprüngen versehen sind, die eine sich in Längsrichtung des Trägers erstreckende Höhlung bilden, **dadurch gekennzeichnet, dass** die Seitenwände (43,44) sowohl der Säule (4) als auch des Schlittens (6) mit Vorsprüngen (42,38) und Verstärkungsrippen (40,45,51,52) versehen sind, wobei alle besagten Vorsprünge und Rippen hauptsächlich senkrecht zu den Seitenwänden (43,44) entweder der Säule (4) oder des Schlittens (6) verlaufen, wobei besagte Höhlung (49) mit einem Vorsprung (42) auf dem anderen Teil zusammenwirkt, um die Gleitverbindung zwischen beiden Teilen (4,6) herzustellen, wobei besagte Höhlung außerhalb des Raums (9) angeordnet ist, worin die Mittel (8) zum Bewegen des Schlittens (6) positioniert sind, wobei zumindest ein Teil der Seitenwand (44) des Schlittens (6) oder eine Verstärkungsrippe besagter Seitenwand sich zu dessen Bewegungsmitteln hin erstreckt, wobei besagte Seitenwände (43,44) der Säule (4) und des Schlittens (6) sich in einem solchen Abstand zueinander erstrecken, dass die Verstärkungsrippen (40,45,51,52) beider Teile sich in dem Raum zwischen besagten Seitenwänden befinden und sich bis nahe der Seitenwand des anderen Teils erstrecken, wobei besagte Säule und besagter Schlitten hauptsächlich durch Aluminiumextrusion verwirklicht sind.

2. Hubladevorrichtung gemäß Anspruch 1, dadurch gekennzeichnet, dass der Vorsprung (38) von einer einzigen Rippe gebildet wird, an der ein oder mehr Leisten (13) aus Kunststoff (13) befestigt worden sind, und dass die Höhlung (49) von zwei in einem Abstand zueinander befindlichen L-förmigen Rippen (45,36) gebildet wird, die zusammen die Kunststoffleiste einschließen.

3. Hubladevorrichtung gemäß Anspruch 1 oder 2, dadurch gekennzeichnet, dass das Profil der Säule (4) mit einem Randteil (30) versehen ist, das sich in Bezug zum Behälter (2) nach hinten und vertikal erstreckt, worauf ein Dichtungsstreifen (26) montiert worden ist, der mit der Ladeplattform (7) in dessen nach oben geschwenkter Position zusammenwirken kann, oder mit einer am Behälter (2) montierten Tür oder dergleichen.

4. Hubladevorrichtung gemäß Anspruch 3, dadurch gekennzeichnet, dass das Profil des Schlittens (6) sich über den Randbereich (30) der Säule (4) hinaus erstreckt, sodass eine Nässebarriere (37) zwischen besagtem Randbereich und der Ladeplattform gebildet wird.

5. Hubladevorrichtung gemäß einem der vorgenannten Ansprüche, dadurch gekennzeichnet, dass die Seitenwände (43) der Säulen (4) einander gegenüberliegen und dass die Seitenwände (44) der Schlitten (6) sich in der Verlängerung der Seitenwände (10) des Behälters (2) befinden, worin die zwei vertikalen Räume (9) zur Aufnahme von zumindest einem Teil der Mittel (8) zum Bewegen der Schlitten (6) in vertikaler Richtung zwischen den Verstärkungs- oder Verbindungsrippen (51,45) der Seitenwände (43,44) von Säule (4) und Schlitten (6) und einem Teil der Seitenwände (43) der Säule (4) gebildet werden.

6. Hubladevorrichtung gemäß einem der Ansprüche 1-4, dadurch gekennzeichnet, dass die Außenfläche der Seitenwände (43) der Säulen (4) an die Außenfläche der Seitenwände (10) des Behälters (2) anschließt und dass die vertikalen Räume (9) zur Aufnahme der Mittel (8) zum Bewegen des Schlittens (6) in Bezug zu den Säulen (4) zwischen Verstärkungsrippen (51,52;40,32) der Säule (4) und des Schlittens (6) gebildet werden, wobei besagter Raum (9) weiterhin von einem Teil der Seitenwand (44) des Schlittens begrenzt wird.

7. Hubladevorrichtung gemäß Anspruch 6, dadurch gekennzeichnet, dass die Säule (4) mit einer zweiten, hauptsächlich plattenförmigen Längsrippe (30) versehen ist, die zumindest teilweise den Schlitten (6) umgibt und deren freies vertikales Ende mit einem Dichtungsstreifen (26) versehen ist, der mit der Ladeplattform (7) in deren aufwärts geschwenktem Zustand oder mit einer den Behälter (2) abschließenden Tür oder dergleichen zusammenwirken kann.

8. Hubladevorrichtung gemäß Anspruch 6 oder 7, dadurch gekennzeichnet, dass der Raum (9) zur Aufnahme der Bewegungsmittel (8) eines Schlittens (6) von einer Verlängerung der Verstärkungsrippe (51) der Säule (4) gebildet wird, die sich in der Ebene der Ladeöffnung (5) befindet, und von der damit verbundenen zweiten Längsrippe (30) der Säule (4), von der Seitenwand (44) des Schlittens (6) und von einer damit verbundenen Verstärkungsrippe (40).

9. Hubladevorrichtung gemäß Anspruch 6 oder 7, dadurch gekennzeichnet, dass der Raum (9) für die Bewegungsmittel (8) sich hinter der Verstärkungsrippe (33) der Säule (4) befindet, die mit den größten Abstand zum Behälter (2) und zwischen der Seitenwand (44) des Schlittens (6) und einer damit verbundenen Verlängerung (32) angeordnet ist.

10. Hubladevorrichtung gemäß Anspruch 9, dadurch gekennzeichnet, dass der betreffende Raum (9) zur Außenseite hin offen ist und mit einer lösbaren Abdeckplatte (27) verschlossen werden kann.

## Revendications

1. Dispositif de levage de charge pour monter sur le conteneur (2) d'un camion (1), ledit dispositif (3), lorsqu'on le regarde à l'état monté, comprenant deux montants verticaux (4) fixés au conteneur (2) des deux côtés de l'ouverture de chargement (5) ou faisant partie de cette dernière, lesdits montants (4) étant munis de moyens pour recevoir en coulissement des coulisseaux (6) auxquels est fixée en pivotement une plate-forme de chargement (7), des moyens (8) étant prévus pour déplacer les coulisseaux, lesdits moyens étant reliés aux montants (4) ou au conteneur (2) d'un côté et aux coulisseaux (6) de l'autre côté, chacun étant positionné dans un espace (9) formés par des parties d'un montant et d'un coulisseau, chacun desdits montants (4) et desdits coulisseaux (6) prenant la forme de poutrelles allongées s'étendant en direction verticale et comprenant une paroi latérale longitudinale (43, 44) en forme de plaque qui, lorsqu'on la regarde dans une vue en plan, s'étend dans la direction longitudinale du conteneur (2) et est essentiellement parallèle à la paroi latérale (10) de ce dernier, les parois latérales (43, 44) d'une partie, qu'il s'agisse du montant (4) ou du coulisseau (6), étant munies de protubérances formant un renfoncement dans la direction longitudinale de la poutrelle, caractérisé en ce que les parois latérales (43, 44) à la fois du montant (4) et du coulisseau (6) sont munies de protubérances (42, 38) et de nervures de renforcement (40, 45, 51, 52), l'ensemble desdites protubérances et desdites nervures étant essentiellement disposées à angle droit par rapport aux parois latérales (43, 44) qu'il s'agisse du montant (4) ou du coulisseau (6), ledit renfoncement (49) coopérant avec une protubérance (42) sur l'autre partie pour établir la connexion par coulissement entre les deux parties (4, 6), ledit renfoncement étant prévu à l'extérieur de l'espace (9) dans lequel est positionné le moyen (8) pour déplacer le coulisseau (6), au moins une partie de la paroi latérale (44) du coulisseau (6), ou une nervure de renforcement de ladite paroi latérale s'étendant en direction du moyen de déplacement pour cette dernière, lesdites parois latérales (43, 44) du montant (4) et du coulisseau (6) s'étendant à une distance telle l'une de l'autre que les nervures de renforcement (40, 45, 51, 52) des deux parties se situent dans l'espace ménagé entre lesdites parois latérales et s'étendent jusqu'à proximité de la paroi latérale de l'autre partie, ledit montant et ledit coulisseau étant réalisé, à titre principal, par extrusion d'aluminium.

2. Dispositif de levage de charge selon la revendication 1, caractérisé en ce que la protubérance (38) est constituée d'une nervure unique sur laquelle sont fixées une ou plusieurs bandes (13) de matière plastique (13) et le renfoncement (49) est formé par deux nervures en L (45, 36) espacées l'une de l'autre, qui renferment ensemble la bande en matière plastique.

3. Dispositif de levage de charge selon la revendication 1 ou 2, caractérisé en ce que le profilé du montant (4) est muni d'une partie marginale (30) s'étendant vers l'arrière et la verticale par rapport au conteneur (2), sur laquelle est montée une bande d'étanchéisation (26) qui peut coopérer avec la plate-forme de chargement (7) dans sa position repliée, ou avec une porte ou analogues montées sur le conteneur (2).

4. Dispositif de levage de charge selon la revendication 3, caractérisé en ce que le profilé du coulisseau (6) s'étend au-delà de la portion marginale (30) du montant (4), si bien que l'on obtient une barrière (37) contre l'humidité entre ladite portion marginale et la plate-forme de chargement.

5. Dispositif de levage de charge selon l'une quelconque des revendications précédentes, caractérisé en ce que les parois latérales (43) des montants (4) sont disposées en face-à-face et en ce que les parois latérales (44) des coulisseaux (6) sont disposées dans le prolongement des parois latérales (10) du conteneur (2), dans lequel les deux espaces verticaux (9) pour la réception d'au moins une partie du moyen (8) destiné à déplacer les coulisseaux (6) en direction verticale sont formés entre les nervures de renforcement ou de connexion (51, 45) des parois latérales (43, 44) du montant (4) et du coulisseau (6) et une partie de la paroi latérale (43) du montant (4).

6. Dispositif de levage de charge selon l'une quelconque des revendications 1 à 4, caractérisé en ce que la surface externe des parois latérales (43) des montants (4) relie la surface externe des parois latérales (10) du conteneur (2), et en ce que les espaces verticaux (9) destinés à recevoir le moyen (8) pour déplacer le coulisseau (6) par rapport aux montants (4) sont formés entre les nervures de renforcement (51, 52; 40, 32) du montant (4) et du coulisseau (6), lesdits espaces (9) étant en outre limités par une partie de la paroi latérale (44) du coulisseau.

7. Dispositif de levage de charge selon la revendication 6, caractérisé en ce que le montant (4) est muni d'une deuxième nervure longitudinale (30) de forme essentiellement plate renfermant au moins en partie le coulisseau (6) et dont le bord terminal vertical libre est muni d'une bande d'étanchéisation (26) qui est à même de coopérer avec la plate-forme de chargement (7) dans son état replié ou avec une porte ou analogues fermant le conteneur (2).

8. Dispositif de levage de charge selon la revendication 6 ou 7, caractérisé en ce que l'espace (9) destiné à recevoir le moyen de déplacement (8) d'un coulisseau (6) est formé par un prolongement de la nervure de renforcement (51) du montant (4), qui est située dans le plan de l'ouverture de chargement (5), la deuxième nervure longitudinale (30) du montant (4) qui s'y relie, la paroi latérale (44) du coulisseau (6) et une nervure de renforcement (40) y étant reliées.

9. Dispositif de levage de charge selon la revendication 6 ou 7, caractérisé en ce que l'espace (9) destiné à recevoir le moyen de déplacement (8) est situé derrière la nervure de renforcement (52) du montant (4) la plus éloignée du conteneur (2) et entre la paroi latérale (44) du coulisseau (6) et un prolongement (32) qui lui est relié.

10. Dispositif de levage de charge selon la revendication 9, caractérisé en ce que l'espace (9) concerné est ouvert sur l'extérieur et peut être obturé par une plaque de recouvrement amovible (27).
